# EUROPÄISCHE PATENTSCHRIFT

(11) **EP 2 059 739 B1**
(45) Veröffentlichungstag und Bekanntmachung des Hinweises auf die Patenterteilung: **07.10.2020**
(21) Anmeldenummer: 07788276.9
(22) Anmeldetag: 07.08.2007
(51) Int. Cl.: F25D 17/06, F25D 29/00

(54) **KÄLTEGERÄT MIT ZWANGSBELÜFTETEM VERDAMPFER**
REFRIGERATOR WITH FORCED-VENTILATION EVAPORATOR
APPAREIL FRIGORIFIQUE COMPORTANT UN ÉVAPORATEUR À VENTILATION FORCÉE

(30) Priorität: 29.08.2006 DE 102006040370
(43) Veröffentlichungstag der Anmeldung: 20.05.2009
(73) Patentinhaber: BSH Hausgeräte GmbH, 81739 München (DE)
(72) Erfinder: IHLE, Hans, 89537 Giengen (DE)
(86) Internationale Anmeldenummer: PCT/EP2007/058173
(87) Internationale Veröffentlichungsnummer: WO 2008/025653

(56) Entgegenhaltungen:
- EP-A- 0 859 206
- WO-A-2004/109205
- JP-A- 10 185 394
- US-A- 5 255 530
- US-A- 5 657 638
- US-A- 5 711 159
- US-A- 6 006 530
- US-A1- 2005 188 709
- US-A1- 2006 115 366
- US-B1- 6 945 059

## Beschreibung

Die vorliegende Erfindung betrifft ein Kältegerät mit einem Verdichter, einem Verflüssiger und einem durch ein Gebläse mit steuerbarer Leistung zwangsbelüfteten Verdampfer, die in einem Kältemittelkreis verbunden sind, und mit einer Steuereinheit, die eingerichtet ist, die Leistung des Gebläses gegenläufig zu einer Wärmelast des Kältegeräts zu regeln. Ein solches Kältegerät ist aus US 6 006 530 A bekannt.

Bei diesem bekannten Kältegerät entscheidet die Steuereinheit anhand eines Vergleichs der Temperatur einer Lagerkammer mit einer eingestellten Solltemperatur, ob der Verdichter und das Gebläse eingeschaltet werden oder nicht, und wenn beide eingeschaltet worden sind, wird die Drehzahl des Gebläses, gesteuert anhand der Temperatur des Verdampfers oder der seit dem Start des Gebläses verstrichenen Zeit allmählich erhöht. So soll der Wärmeeintrag in die Lagerkammer zu Beginn des Verdichterbetriebs gering gehalten werden.

Wenn ein Kältegerät stationär arbeitet, befindet sich sein Verdampfer auf einer niedrigeren Temperatur als der Umgebungstemperatur, so dass ein beträchtlicher Anteil des im Kältemittelkreis zirkulierenden Kältemittels in dem Verdampfer unter niedrigem Druck gespeichert sein kann. Diese Speicherwirkung begrenzt auch den Kältemitteldruck in den warmen Teilen des Kältemittelkreises, gegen den der Verdichter anarbeitet, und damit die vom Verdichter abgeforderte Leistung. Wenn jedoch ein Kältegerät neu in Betrieb genommen wird und sein Verdampfer sich auf Umgebungstemperatur befindet, ist der Druck im Kältemittelkreis erheblich höher als im stationären Betrieb, und dementsprechend hoch ist auch die Verdichterleistung, die benötigt wird, um den stationären Betriebszustand zu erreichen. Wenn der Verdichter von seiner Konstruktion her nicht ausgelegt ist, um diese Leistung erbringen zu können, kann der Fall eintreten, dass das Herunterkühlen des Verdampfers nicht gelingt. Auch ein zu knapp bemessener Verflüssiger kann in einer solchen Situation zu Problemen führen, wenn seine Wärmeaustauschleistung nicht genügt, um das vom Verdichter in ihn hineingedrückte und dabei stark erhitzte Kältemittel ausreichend abzukühlen, bevor es in den Verdampfer eintritt. Um diese Gefahr auszuschließen, ist es herkömmlicherweise erforderlich, Verdichter und Verflüssiger so großzügig zu dimensionieren, dass sie ein Anlaufen des Kältegerätes auch unter Extrembedingungen gewährleisten können. Eine solche großzügige Dimensionierung ist für den Betrieb des Kältegerätes unter stationären Bedingungen nicht erforderlich, benötigt aber Platz und verursacht hohe Fertigungskosten.

Aufgabe der Erfindung ist, ein Kältegerät zu schaffen, das ein zuverlässiges Anfahren gewährleistet und es dabei erlaubt, Verdichter und Verflüssiger knapp zu dimensionieren.

Die Aufgabe wird gelöstdurch ein Kältegerät mit den Merkmalen des Anspruchs 1

Im stationären Betrieb ist die Wärmelast des Kältegerätes deutlich geringer als wenn beim Anfahren der Kühlraum des Kältegerätes ausgehend von der Umgebungstemperatur heruntergekühlt werden muss. Die Erfindung sieht also vor, dass unter stationären Bedingungen das Gebläse mit höherer Leistung arbeitet als beim Anfahren. Indem das Gebläse bei stationären Bedingungen in Betrieb ist, erhöht es die flächenbezogene Wärmeaustauschleistung des Verdampfers, so dass das erfindungsgemäße Kältegerät mit einem kleinen Verdampfer auskommt, dessen Kühlleistung im unbelüfteten Zustand möglicherweise nicht ausreichen würde, um das Lagerfach auf seiner Solltemperatur zu halten. Seine Kühlleistung im unbelüfteten oder nur schwach belüfteten Zustand genügt aber in jedem Falle, um die Temperatur des Lagerfaches unter die Umgebungstemperatur abzusenken. Indem beim Anfahren des Gerätes die Gebläseleistung gering gehalten wird, gelingt es, den Verdampfer ausreichend abzukühlen, so dass er wie unter stationären Bedingungen eine große Kältemittelmenge aufnehmen kann und sich der Druck im Kältemittelkreislauf reduziert. Zusammen mit dem Druck verringert sich auch die vom Verdichter abgeforderte Leistung, so dass dieser knapp und kostengünstig bemessen sein kann.

Ob die von dem Kältemittelkreis zu bewältigende Wärmelast hoch oder niedrig ist, kann auf unterschiedliche Weise abgeschätzt werden. Ein besonders einfacher Weg ist nach Anspruch 1, die Steuereinheit mit Zeiterfassungsmitteln zum Erfassen der seit Einschalten des Kältegerätes verstrichenen Zeit auszustatten und sie einzurichten, um anhand der erfassten Zeit zu entscheiden, ob eine hohe Wärmelast vorliegt oder nicht, wobei einfach davon ausgegangen wird, dass nach Ablauf eines vorgegebenen Anlaufzeitintervalls ein wesentlicher Teil der anfangs vorhandenen Wärmemenge aus dem Kältefach des Geräts abgeführt und die Wärmelast entsprechend verringert ist . Eine solche Entscheidung ist nicht immer zuverlässig, da auch Situationen wie etwa eine kurzzeitige Unterbrechung der Netzstromversorgung auftreten können, die als ein Aus- und Wiedereinschalten des Kältegerätes erfasst werden, ohne dass deswegen notwendigerweise eine hohe Wärmelast vorliegen müsste. Dies ist jedoch nicht weiter kritisch, da in einem solchen Fall die Reduzierung der Gebläseleistung lediglich zu einer zeitweiligen Verringerung der Kühlleistung des Verdampfers führt, diese aber im Rahmen einer Thermostatregelung der Fachtemperatur im Allgemeinen automatisch durch eine längere Laufzeit des Verdichters ausgeglichen wird, ohne dass es zu einer kritischen Zunahme der Fachtemperatur kommt.

Eine Entscheidung über das Vorliegen einer hohen Wärmelast kann auch direkt anhand der Temperatur des Lagerfaches getroffen werden. Ein hierfür benötigter Temperaturfühler ist herkömmlicherweise in jedem Kältegerät vorhanden. Ein Grenzwert, bei dessen Überschreitung das Vorliegen einer hohen Wärmelast angenommen wird, ist zweckmäßigerweise zwischen einer typischen Solltemperatur des Lagerfaches und einer typischen Umgebungstemperatur gewählt.

Beide Kriterien sind durch logische Verknüpfung miteinander kombinierbar. Insbesondere ist es zweckmäßig, eine hohe Wärmelast nur dann anzunehmen, wenn beide Kriterien gleichzeitig erfüllt sind.

Als alternatives oder weiteres Kriterium für die Wärmelast kann eine von einem Außentemperatursensor erfasste Temperatur herangezogen werden.

Des Weiteren kann zweckmäßigerweise die Steuereinheit eingerichtet sein, eine Temperatur des Verdichters zu schätzen und anhand der geschätzten

Verdichtertemperatur zu entscheiden, ob eine hohe Wärmelast vorliegt oder nicht. Mit anderen Worten wird das Vorliegen einer hohen Wärmelast daran erkannt, dass die Erwärmung des gegen diese hohe Wärmelast anarbeitenden Verdichters erfasst wird. Zu diesem Zweck kann am Verdichter ein Temperatursensor angebracht sein; eine andere zweckmäßige Möglichkeit ist, die Verdichtertemperatur anhand des Ohmschen Widerstandes eines elektrischen Leiters des Verdichters, insbesondere eines Wicklungsdrahtes seines Elektromotors, abzuschätzen.

Bei der von der Steuereinheit geregelten Leistung des Gebläses kann es sich um eine momentane Leistung handeln; vorzugsweise ist die geregelte Leistung eine mittlere Leistung des Gebläses, wobei sich der Mittelungszeitraum zweckmäßigerweise über eine Betriebsphase des intermittierend betriebenen Verdichters oder einen Teil einer solchen Betriebsphase erstrecken kann. Dies ermöglicht insbesondere eine einfache Leistungsregelung durch Ein- und Austasten des Gebläses.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines erfindungsgemäßen Kältegerätes;
- Fig. 2: ein Flussdiagramm eines Arbeitsverfahrens einer Steuereinheit des Kältegerätes gemäß einer ersten Ausgestaltung;
- Fig. 3: ein Flussdiagramm eines Arbeitsverfahrens gemäß einer zweiten Ausgestaltung; und
- Fig. 4: ein Flussdiagramm eines Arbeitsverfahrens gemäß einer dritten Ausgestaltung.

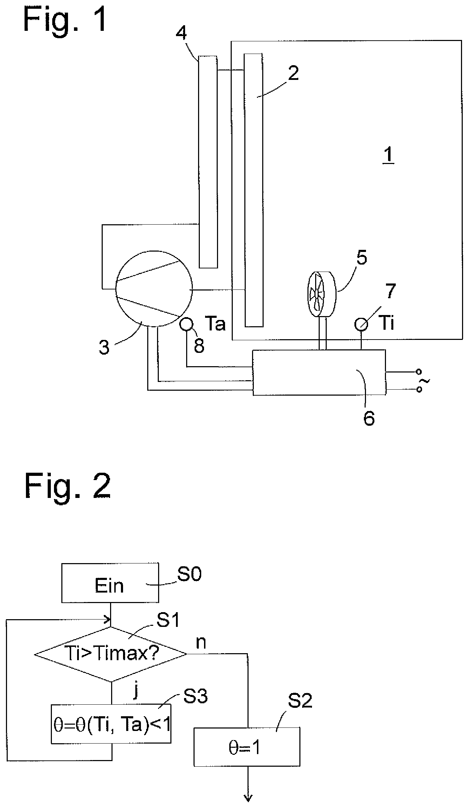

Das in Fig. 1 schematisch dargestellte Kältegerät umfasst ein wärmeisolierendes Gehäuse 1 mit wenigstens einem Kältefach und einem dem Kältefach zugeordneten Verdampfer 2. Der Verdampfer 2 ist mit einem durch einen Elektromotor angetriebenen Verdichter 3 und einem Verflüssiger 4 in einem Kältemittelkreislauf verbunden. Der Verdampfer 2 kann unmittelbar an das Kältefach angrenzend angeordnet sein, zum Beispiel in Form eines Cold-Wall-Verdampfers, wobei in diesem Fall ein frei in dem Kältefach platziertes Gebläse 5 vorgesehen ist, um eine Luftströmung entlang der von dem Verdampfer 2 gekühlten Wand des Kältefaches anzutreiben; es kann sich auch um einen No-frost-Verdampfer handeln, der in einer von dem Kältefach abgesetzten Kammer untergebracht ist, wobei in diesem Fall das Gebläse 5 an einem Durchgang zwischen Kammer und Kältefach angeordnet ist, um Luftaustausch zwischen beiden anzutreiben.

Eine Steuereinheit 6 ist an Temperaturfühler 7 im Kältefach und 8 außerhalb des Kältefaches gekoppelt, um anhand von von den Temperaturfühlern 7, 8 erfassten Innentemperaturen Ti und Außentemperaturen Ta den Betriebszustand des Verdichters 3 und des Gebläses 5 zu steuern.

Der Außentemperaturfühler 8 kann benachbart zu einer Außenwand des Gehäuses 1 angebracht sein, um eine in der Umgebung des Kältegerätes vorherrschende Temperatur zu erfassen; er kann aber auch zusammen mit dem Verdichter 3 in einem Maschinenraum des Gehäuses 1 untergebracht sein, wo die von ihm erfasste Temperatur durch die Abwärme des Verdichters 3 beeinflusst ist.

Anstelle des Temperaturfühlers 8 oder ergänzend zu diesem kann die Steuereinheit 6 auch mit einer Messschaltung zum Erfassen des Ohmschen Widerstandes einer Wicklung des über die Steuereinheit 6 mit Betriebsspannung versorgten Elektromotors des Verdichters 3 ausgestattet sein. Da der Ohmsche Widerstand der Wicklung im Allgemeinen temperaturabhängig ist, erlaubt die Erfassung eines Widerstandswertes der Wicklung einen Rückschluss auf die Temperatur des Verdichters 3.

Eine erste Ausgestaltung eines von der Steuereinheit 6 ausgeführten Arbeitsverfahrens wird mit Bezug auf Fig. 2 beschrieben. Das Verfahren setzt ein mit dem Einschalten des Kältegerätes, durch Betätigen eines Netzschalters, oder indem auf andere Weise eine Versorgungsspannung an die Steuereinheit 6 angelegt wird (Schritt S0). Die Steuereinheit fragt in Schritt S1 die Temperatur Ti des Kältefaches vom Temperaturfühler 7 ab und vergleicht diese mit einem vorgegebenen Grenzwert Timax. Timax liegt deutlich über dem Temperaturbereich, auf den das Kältefach im Dauerbetrieb geregelt wird und kann im Zimmertemperaturbereich oder sogar darüber liegen. Wenn die Kältefachtemperatur Ti kleiner als Timax ist, wird angenommen, dass die Bedingungen für das Anlaufen des Kältegerätes normal sind und keine Schutzmaßnahmen getroffen werden müssen, um eine Überlastung des Verdichters 3 zu verhindern. In diesem Fall geht das Verfahren direkt über zu Schritt S7, in welchem ein Tastverhältnis θ = 1 für den Betrieb des Gebläses 5 festgelegt wird und dieses somit kontinuierlich betrieben wird, so lange der Verdichter 3 läuft.

Wenn die Innentemperatur Ti über dem Grenzwert Timax liegt, ist davon auszugehen, dass in dem Kältemittelkreis ein hoher Druck herrscht, gegen den über längere Zeit anzuarbeiten den Verdichter 3 stark belasten würde. In diesem Fall wird in Schritt S3 ein Tastverhältnis θ < 1 für den Betrieb des Gebläses 5 festgelegt, und das Gebläse wird, während der Verdichter 3 kontinuierlich läuft, mit diesem Tastverhältnis θ intermittierend betrieben. Die Periode der Ein- und Austastung des Gebläses 5 kann im Millisekundenbis Minutenbereich gewählt werden. Das Tastverhältnis kann θ allein anhand der Temperatur Ti festgelegt werden, wobei in diesem Fall der Außentemperaturfühler 8 entfallen kann; es kann aber auch mit Hilfe der Außentemperatur Ta der Wärmeeintrag in das Gerät in der Weise berücksichtigt werden, dass θ um so kleiner gewählt wird, je höher die Außentemperatur Ta ist.

In dem Fall, dass der Temperaturfühler 8 der Abwärme des Verdichters 3 ausgesetzt ist, bietet die Berücksichtigung der Temperatur Ta bei der Festlegung des Tastverhältnisses θ den zusätzlichen Vorteil, dass eine durch hohe Belastung verursachte übermäßige Erwärmung des Verdichters 3 unmittelbar erfasst wird und über die Verringerung des Tastverhältnisses θ eine Entlastung des Verdichters 3 herbeiführt.

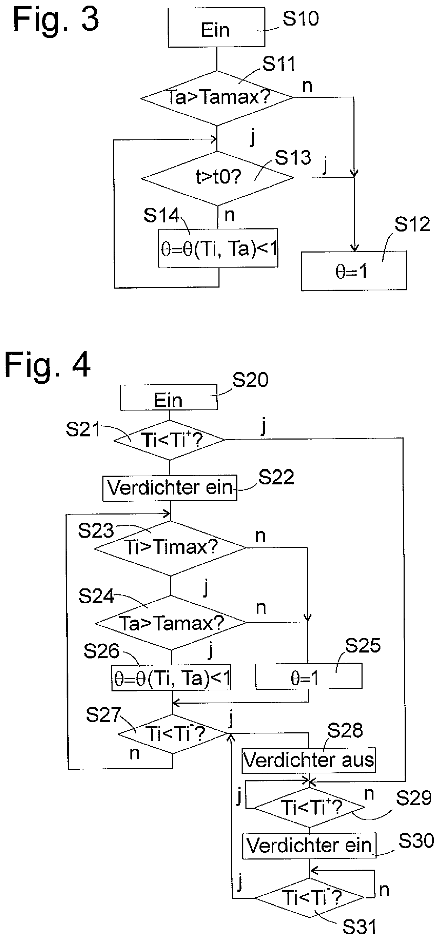

Bei der in Fig. 3 gezeigten abgewandelten Ausgestaltung des Verfahrens überprüft die Steuereinheit 6 nach dem Einschalten S10 des Kältegerätes lediglich in Schritt S11, ob die vom Temperaturfühler 8 gelieferte Außentemperatur Ta über einem Grenzwert Tamax liegt. Dieser Grenzwert ist zweckmäßigerweise ebenfalls im Zimmertemperaturbereich oder darüber festgelegt. Wenn die Temperatur Ta nicht über dem Grenzwert liegt, werden normale Anfahrbedingungen des Kältegerätes angenommen, und in Schritt S12 wird ein Tastverhältnis θ = 1 für das Gebläse 5 festgesetzt, so dass dieses jeweils zeitgleich mit dem Verdichter 3 arbeitet. Anderenfalls wird in Schritt S13 überprüft, ob die seit dem Einschalten S10 verstrichene Zeit t größer als eine vorgegebene Anfahrzeitspanne t0 ist.

Wenn ja, das heißt, wenn die Anfahrzeitspanne verstrichen ist, geht das Verfahren zu Schritt S12 und damit zu Normalbetrieb über; anderenfalls wird in Schritt S14 ein Tastverhältnis θ < 1 festgelegt, mit dem dann der Verdichter 3 bis zum Ablauf des Anfahrzeitintervalls t0 betrieben wird. Im einfachsten Fall kann das in Schritt S14 festgelegte Tastverhältnis ein temperaturunabhängig vorgegebener konstanter Wert sein; eine Berücksichtigung von Fach- und Umgebungstemperaturen Ti, Ta kann wie in Schritt S3 stattfinden.

Das Verfahren der Fig. 3 begrenzt durch den Schritt S13 die maximale Zeitspanne, in der nach dem Einschalten das Gerät mit eingeschränkter Gebläseleistung betrieben werden kann, und schließt dadurch aus, dass das Gerät unter ungünstigen Temperaturbedingungen nicht zum Normalbetrieb findet, in dem θ = 1 gilt. Es besteht jedoch die Möglichkeit, dass das Gerät nach einem Stromausfall mit eingeschränkter Gebläseleistung anfährt, auch wenn die Fachtemperatur Ti nicht so hoch ist, dass dies erforderlich wäre.

Ein weiterentwickeltes Betriebsverfahren, das diesen Nachteil vermeidet, ist in Fig. 4 dargestellt. Hier folgt auf den Schritt S20 des Einschaltens zunächst ein Schritt S21, in welchem geprüft wird, ob die Fachtemperatur Ti kleiner ist als die obere Grenze Ti⁺ der im stationären Betrieb einzuhaltenden Fachtemperatur. Wenn dies der Fall ist, kann davon ausgegangen werden, dass der Einschaltvorgang S20 der Wiederkehr einer zuvor für kurze Zeit ausgefallenen Betriebsspannung des Kältegerätes entspricht; in diesem Fall springt das Verfahren zu Schritt S29. Der Verdichter bleibt ausgeschaltet, da eine Kühlung noch nicht erforderlich ist.

Wenn die obere Grenze Ti⁺ in Schritt S21 überschritten ist, wird in Schritt S22 der Verdichter eingeschaltet. Anschließend werden in den Schritten S23, S24 Fachtemperatur Ti und Umgebungstemperatur Ta jeweils mit Grenzwerten Timax, Tamax verglichen, die wie bei den Verfahren der Figuren 2 und 3 deutlich über Ti⁺ liegen. Wenn keiner der beiden Grenzwerte überschritten ist, wird in Schritt S25 das Tastverhältnis θ = 1 gesetzt; bei Überschreitung eines der beiden Grenzwerte wird in Schritt S26 ein Tastverhältnis θ <1 festgesetzt, und das Gebläse 5 wird mit dem festgelegten Tastverhältnis betrieben. In Schritt S27 folgt eine Überprüfung, ob die untere Grenze Ti des Solltemperaturbereiches erreicht ist. Wenn nein, kehrt das Verfahren zu Schritt S23 zurück, so dass, wenn sich eine der Temperaturen Ti, Ta geändert hat, ein neues Tastverhältnis θ festgelegt wird. Daraus ergibt sich die Möglichkeit, während des Anlaufens des Gerätes das Tastverhältnis auch nachträglich abzusenken, wenn eine im Laufe des Betriebs steigende Temperatur Ta auf eine Überlastung des Verdichters 3 hinweist.

Wenn in Schritt S27 festgestellt wird, dass Ti die untere Grenze Ti⁻ unterschritten hat, ist das Kältegerät erfolgreich angelaufen, und es wird in an sich bekannter Weise in Schritt S28 der Verdichter ausgeschaltet. Das Kältegerät geht nun in den stationären Betrieb über, in welchem nur noch in Schritten S29, S31 die Fachtemperatur Ti mit den oberen und unteren Grenzen Ti⁺, Ti⁻ verglichen und je nach Vergleichsergebnis der Verdichter ausgeschaltet wird (S28) oder der Verdichter eingeschaltet und das Gebläse 5 mit Tastverhältnis 1 betrieben wird (S30).

## Patentansprüche

1. Kältegerät mit einem Verdichter (3), einem Verflüssiger (4) und einem Verdampfer (2), die in einem Kältemittelkreis verbunden sind, wobei der Verdampfer (3) durch ein Gebläse (5) mit steuerbarer Leistung zwangsbelüftet ist, und mit einer Steuereinheit (6), die eingerichtet ist, die Leistung des Gebläses (5) gegenläufig zu einer Wärmelast des Kältegeräts zu regeln, **dadurch gekennzeichnet, dass** die Steuereinheit (6) eingerichtet ist, die seit Einschalten des Kältegeräts verstrichene Zeit (t) zu erfassen und anhand der erfassten Zeit zu entscheiden (S13), ob eine hohe Wärmelast vorliegt oder nicht.

2. Kältegerät nach Anspruch 1, **dadurch gekennzeichnet, dass** die Steuereinheit (6) eingerichtet ist, anhand der Temperatur (Ti) eines Lagerfachs zu entscheiden (S1; S23), ob eine hohe Wärmelast vorliegt oder nicht.

3. Kältegerät nach einem der vorhergehenden Ansprüche, **dadurch gekennzeichnet, dass** es einen Außentemperatursensor (8) aufweist und die Steuereinheit (6) eingerichtet ist, anhand der von dem Außentemperatursensor (6) erfassten Temperatur (Ta) zu entscheiden (S11; S24), ob eine hohe Wärmelast vorliegt oder nicht.

4. Kältegerät nach einem der vorhergehenden Ansprüche, **dadurch gekennzeichnet, dass** die Steuereinheit (6) eingerichtet ist, eine Temperatur des Verdichters (3) zu schätzen und anhand der geschätzten Verdichtertemperatur zu entscheiden, ob eine hohe Wärmelast vorliegt oder nicht.

5. Kältegerät nach einem der vorhergehenden Ansprüche, **dadurch gekennzeichnet, dass** der Verdichter (3) intermittierend betrieben ist und die geregelte Leistung eine über eine Betriebsphase oder einen Teil einer Betriebsphase des Verdichters (3) gemittelte Leistung ist.

6. Kältegerät nach einem der vorhergehenden Ansprüche, **dadurch gekennzeichnet, dass** die Steuereinheit (6) eingerichtet ist, die Leistung des Gebläses (5) durch Ein- und Austasten des Gebläses bei laufendem Verdichter (3) zu regeln.

## Claims

1. Refrigerator with a compressor (3), a condenser (4) and an evaporator (2), which are connected in a refrigerant circuit, with the evaporator (3) being forced- ventilated by a fan (5) with adjustable power, and with a control unit (6), which is configured to regulate the power of the fan (5) in the opposite sense to a thermal load of the refrigerator, **characterised in that** the control unit (6) is configured to detect the time (t) which has elapsed since the refrigerator was switched on and to decide on the basis of the detected time (S13) whether a high thermal load is present or not.

2. Refrigerator according to claim 1, **characterised in that** the control unit (6) is configured, on the basis of the temperature (Ti) of a storage compartment to decide (S1; S23) whether a high thermal load is present or not.

3. Refrigerator according to one of the preceding claims, **characterised in that** it has an outside temperature sensor (8) and the control unit (6) is configured, on the basis of the temperature (Ta) detected by the outside temperature sensor (6) to decide (S11; S24), whether a high thermal load is present or not.

4. Refrigerator according to one of the preceding claims, **characterised in that** the control unit (6) is configured to estimate a temperature of the compressor (3) and to decide, based on the estimated compressor temperature, whether a high thermal load is present or not.

5. Refrigerator according to one of the preceding claims, **characterised in that** the compressor (3) is operated intermittently and the regulated power is a power averaged over an operating phase or a part of an operating phase of the compressor (3).

6. Refrigerator according to one of the preceding claims, **characterised in that** the control unit (6) is configured to regulate the power of the fan (5) by on and off sampling of the fan when the compressor (3) is running.

## Revendications

1. Appareil frigorifique comprenant un compresseur (3), un condenseur (4) et un évaporateur (2), lesquels sont reliés dans un circuit de fluide frigorigène, dans lequel l'évaporateur (3) est ventilé de manière forcée par un ventilateur (5) avec une puissance réglable, et comprenant une unité de commande (6) qui est configurée pour régler la puissance du ventilateur (5) de manière inverse à une charge de chaleur de l'appareil frigorifique, **caractérisé en ce que** l'unité de commande (6) est configurée pour saisir le temps (t) écoulé depuis la mise en marche de l'appareil frigorifique et, à l'aide du temps saisi, pour décider (S13) si une charge de chaleur élevée est présente ou non.

2. Appareil frigorifique selon la revendication 1, **caractérisé en ce que** l'unité de commande (6) est configurée pour décider (S1 ; S23), à l'aide de la température (Ti) d'un compartiment de stockage, si une charge de chaleur élevée est présente ou non.

3. Appareil frigorifique selon l'une quelconque des revendications précédentes, **caractérisé en ce qu'**il comprend un capteur de température extérieure (8) et **en ce que** l'unité de commande (6) est configurée pour décider (S11 ; S24), à l'aide de la température (Ta) saisie par le capteur de température extérieure (6), si une charge de chaleur élevée est présente ou non.

4. Appareil frigorifique selon l'une quelconque des revendications précédentes, **caractérisé en ce que** l'unité de commande (6) est configurée pour estimer une température du compresseur (3) et, à l'aide de la température estimée du compresseur, pour décider si une charge de chaleur élevée est présente ou non.

5. Appareil frigorifique selon l'une quelconque des revendications précédentes, **caractérisé en ce que** le compresseur (3) fonctionne de manière intermittente et **en ce que** la puissance réglée est une puissance moyenne obtenue sur une phase de fonctionnement ou sur une partie d'une phase de fonctionnement du compresseur (3).

6. Appareil frigorifique selon l'une quelconque des revendications précédentes, **caractérisé en ce que** l'unité de commande (6) est configurée pour régler la puissance du ventilateur (5) par la mise en marche et l'arrêt du ventilateur pendant le fonctionnement du compresseur (3).
